# EUROPEAN PATENT APPLICATION

(11) **EP 1 519 282 A2**
(43) Date of publication of application: **30.03.2005**
(21) Application number: 04101273.3
(22) Date of filing: 26.03.2004
(51) Int. Cl.: G06F 17/30

(54) **A method and system for gathering information regarding the operation of a computing system**

(30) Priority: 25.09.2003 AU 2003905246 P
(71) Applicant: SAP Aktiengesellschaft, 69190 Walldorf (DE)
(72) Inventor: Beg, Ajmal, Besley North NSW 2207 (AU)

(57) **Abstract**

A computing system is arranged to issue requests to a database. Information regarding the operation of the system is gathered by sampling request information at intervals and storing the sampled request information for subsequent analysis. Request information includes details of the request issued along with details of the response returned from the database and details of the execution time of the request, the database access path, the name of the program that issued the request, or the name of the user running the program.

## Description

### Technical Field

This invention relates to a method and system for gathering information regarding the operation of a computing system. In particular, the invention relates to gathering information about the operation of a computing system that is carrying out instructions that cause the computing system to issue requests to a database.

### Background Art

Computing systems are currently used for carrying out a wide range of tasks. To ensure that these computing systems are operating correctly and efficiently, it is necessary to monitor their operation. This is done by gathering and then analysing information regarding the operation of the computing system. Monitoring in this way can identify bottlenecks or inefficiencies which may be rectified by making hardware upgrades; re-programming the software that is running on the computing system or technical tuning of the computing system environment. This monitoring also assists in predicting whether the system will operate satisfactorily under increased load conditions. This aids in the ongoing management of the system.

Often, computing systems issue requests to read or write information to or from a database. In the case of a computing system that is issuing many such requests, the time taken to execute the requests has a significant impact on the overall speed of operation of the computing system. For example, a computing system in a financial institution may be required to run a data-mining type computer program to identify prospective existing customers to be targeted for promoting a new financial product. Such a computer program may take the form of a long running batch job. Calculation is required to be made in respect of every customer account held at the financial institution and the batch job will issue at least one database request in respect of every single account. Such a batch job may run for a few hours or even a few days. It therefore follows that, if execution of the database requests is inefficient, this will affect the performance of the computing system throughout the duration of running the batch job. It will also delay delivery of the reports produced by the data-mining program thus negatively affecting production planning and sales and distribution operations.

Inefficient operation of database requests can be caused for example, by any of the following a) No suitable index is defined for fast access to a database table, b) Fragmented indexes and tables, c) Very large size database tables, and d) Locks held on tables by other running processes.

In order to gather information regarding the operation of computing systems that are making requests of a database, it has been tried to capture request information which includes details of each database request issued by the system along with details of the result of that request such as execution time, database access path, name of the program and user which issued the request. This information is then written to a log file which is later analysed by a skilled programmer. Analysis of the log file can reveal what has caused inefficient operation and so corrective action can be taken. In the case of a system using SQL database queries, this technique is known as "SQL tracing".

The log file that is produced when carrying out SQL tracing can increase in size very rapidly. When capturing detailed information, it is not uncommon for the log file to reach a size of 20 megabytes after only 1 minute of operation in powerful systems. In the case of a long running job, it is not practicable to store all of the SQL tracing information. For instance, after several days, about 60 gigabytes of tracing information may have been produced. This information takes up valuable storage space and is cumbersome. Further, it is not efficient to manually analyse such a large amount of data.

Some have tried setting a maximum size limit for the log file. When the log file reaches the size limit, the file is written over with further SQL tracing information. However, during long running jobs the log file may be written over numerous times. The result of this is that only the most recent SQL tracing information is available for analysis and the written over information is lost. Thus, it is then impossible to obtain an indication of the performance of the computing system for the whole time it was running.

### Disclosure of Invention"

In a first aspect the present invention provides a method of gathering information regarding the operation of a computing system, the computing system being arranged to issue requests to a database, the method including the steps of: sampling request information at intervals; and storing the sampled request information for subsequent analysis.

By sampling the request information at intervals, less data is captured than in prior art systems. Further, the requests for which information is captured are spread substantially throughout the entire time period during which the computer system is operating. The stored information can be analysed to give an indication of the operation of the computing system during the entire time the system was operating.

The request information may include details of the request issued along with details of the response returned from the database.

The request information may include details of the execution time of the request, the database access path, the name of the program that issued the request, or the name of the user running the program.

The requests which are sampled may be grouped together, each group of requests being issued during a short period of time.

Each group of requests may include a series of requests that are issued consecutively.

Each group of requests may include a predetermined number of requests.

Each group may be separated by a pre-determined time period.

The method may further include the step of determining whether the request information sampled for each request satisfies pre-determined criteria. The pre-determined criteria are set so that if they are satisfied, this indicates that a potentially significant event has occurred which is worthy of subsequent analysis.

The pre-determined criteria may include whether the request took more than a predetermined time to be satisfied.

The step of storing the request information may include the condition that the request information is only stored if the pre-determined criteria are satisfied. In this way, the only request information stored is that information that is deemed significant according to the pre-determined criteria. This further reduces the amount of data retained for analysis.

The step of storing may further include storing request information for requests that were issued at around the same time as the request that fulfilled the pre-determined criteria. This provides a greater amount of request information from around the time that a potentially significant event occurred and assists in subsequent analysis.

The method may further include the step of modifying either the predetermined number or the predetermined time period if the pre-determined criteria are satisfied. in this way, more request information can be stored if a potentially significant event occurs.

In a second aspect the present invention provides a system for gathering information regarding the operation of a computing system, the computing system being arranged to issue requests to a database, the system including: sampling means for sampling request information at intervals; and storage means for storing the sampled request information for subsequent analysis.

The system may further include determining means for determining whether the request information sampled for each request satisfies pre-determined criteria.

The system may be arranged to include the condition that the request information is only stored if the pre-determined criteria are satisfied.

The system may be arranged to store request information for requests that were issued at around the same time as the request that fulfilled the pre-determined criteria.

The system may further include modifying means for modifying either the predetermined number or the predetermined time period if the pre-determined criteria are satisfied.

In a third aspect the present invention provides a computer program arranged to instruct a computing system to conduct a method according to the first aspect of the invention.

In a fourth aspect the present invention provides a computer readable medium including a computer program according to the third aspect of the invention.

### Brief Description of Drawings

Figure 1 is a schematic view of an exemplary computing system about which operational information is to be gathered in accordance with a method according to an embodiment of the present invention;

Figure 2 is a schematic illustration of a system according to an embodiment of the present invention shown residing in memory 920 of figure 1;

Figure 3 is a flow chart illustrating the steps of operation of control program 105 of figure 2;

Figure 4 is a flow chart illustrating the steps of operation of logger 106 of figure 2; and

Figure 5 with sections A and B are graphs illustrating operation of the system according to Figure 2.

### Best Mode for Carrying Out the Invention

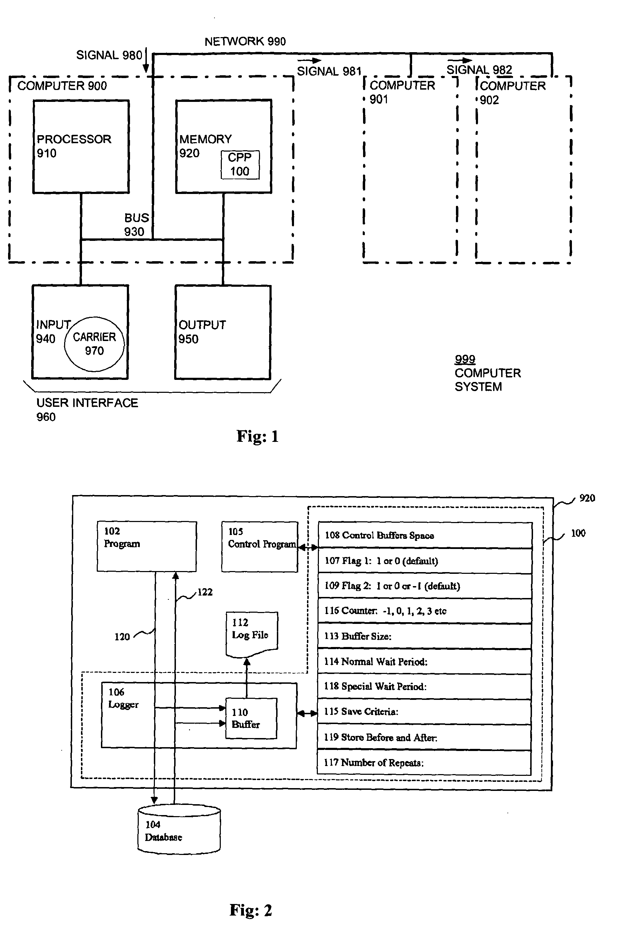

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by any or all of computer program product 100 (CPP or computer program), carrier 970 and signal 980.

In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 has elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920).

Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals.

While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

In the following described embodiment of the invention, information about the operation of computer system 999 is to be gathered. Computer system is to run a program 102 on computer 900. Program 102 is expected to run for a long time and will issue many read and write requests to database 104 stored on computer 901 and receive responses to those requests. Program 102 communicates with database 104 via network 990 and issues requests to the database in the form of SQL requests.

Referring to figure 2, memory 920 of figure 1 is shown schematically and in greater detail. An embodiment of a system according to the present invention is shown in operation in the form of CPP 100. The operation of CPP 100 is governed by executable software routine control program 105. CPP 100 includes sampling means in the form of executable software routine logger 106. CPP further includes control buffer space 108 which is a repository for control flags and settings used by both logger 106 and control program 105. A user may modify the default values for the settings Buffer Size 113, Normal Wait Period 114, Special Wait Period 118, Save Criteria 115, Number of Repeats 117 and Save Before and After 119. The significance of these settings is described in detail below.

All SQL requests issued 120 by program 102 to database 104 are copied to logger 106. Similarly, responses to the issued requests returning to program 102 are copied to logger 106. Logger 106 includes a buffer 110 in which can be stored details of the SQL requests and responses. Contents of buffer 110 can be saved to log file 112.

During normal operation, CPP 100 operates to sample SQL request information in groups. The number of SQL requests in each group is determined by Buffer Size 113, and the time period between each group is defined by Normal Wait Period 114. There are situations where this normal mode of operation is modified as will be later described.

The operating system running on computer 900 includes a function known as a job scheduler which schedules the starting and stopping or programs running on computer 900. In order to gather information about program 102, the job scheduler is configured so that control program 105 and logger 106 start when program 102 starts. For instance, program 102 may be scheduled to run during the night when utilisation of system 999 is low because office workers or other usual daytime users are not using the system.

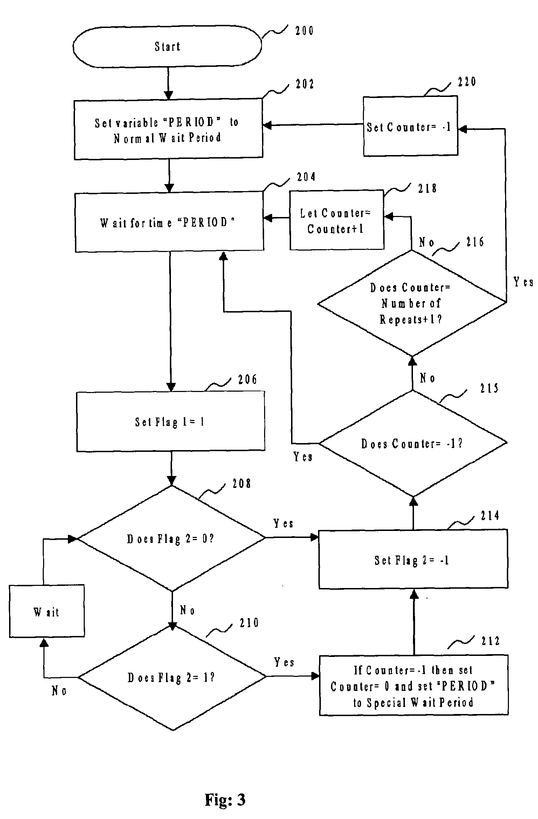

At the time of starting program 102, control program 105 and logger 106 also start. With reference to figure 3, at step 202 control program 105 establishes a variable "PERIOD" and sets it equal to the value of Normal Wait Period 114 stored in control buffer space 108. At step 204 control program waits for the length of time "PERIOD" before proceeding to step 206. At step 206 control program sets the value of Flag 1 in the control buffer space 108 to "1". Flag 1 is a control flag used to trigger the logging activity of logger 106. Control program then proceeds to steps 208 and 210. These steps form a loop that the control program remains in until the value of Flag 2 is either "0" or "1". Flag 2 has a default value of "-1" and can only be set to "0" or "1" by logger 106. Thus, the loop of steps 280 and 210 causes control program to wait until logger 106 has performed certain steps which will now be described.

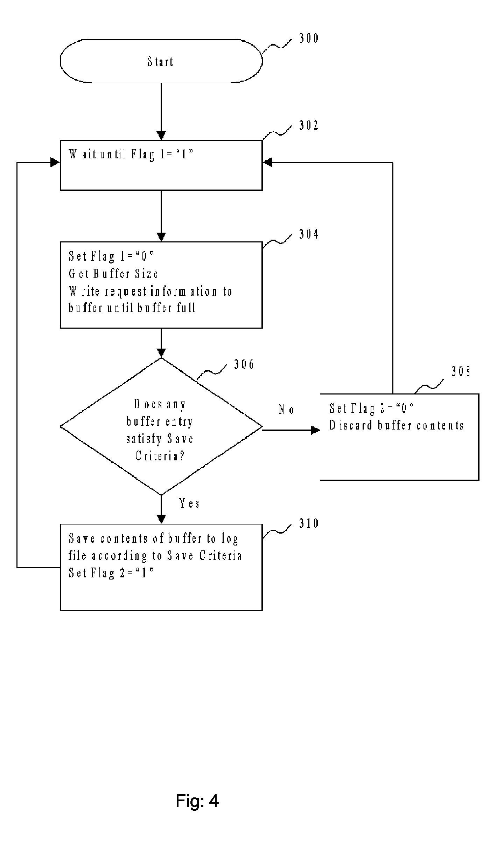

Referring to figure 4, after starting at step 300, logger 106 proceeds to step 302 where it waits until the value of Flag 1 is "1". When this occurs (see step 206 of figure 3), logger proceeds to step 304 where Flag 1 is again set to "0". Logger reads the value Buffer Size 113 from control buffer space 108 and establishes a buffer 110 of this size. Logger 106 then proceeds to sample request information by writing request information to buffer 110 obtained from the SQL requests 120 and responses 122 that are copied to logger. Particularly, the request information includes details of each request 120 issued along with details of the response 122 returned from the database including the time taken to execute the SQL query, the database access path, the name of the program that issued the request, and the name of the user that is running that program. The request information can include an error message, for example, if the request could not be satisfied. When buffer 110 is full, logger 106 proceeds to step 306. The execution time can be calculated by comparing time stamps associated with the request and the response.

At step 306 logger determines whether any of the request information captured in buffer 110 satisfies the Save Criteria 115 stored in control buffer space 108. If the Save Criteria 115 are not satisfied then logger 106 proceeds to step 308 where Flag 2 is set to "0" and the contents of the buffer are discarded. If Flag 2 has a value of "0", this indicates to control program 105 that the Save Criteria 115 were not satisfied.

If the Save Criteria 115 are satisfied then logger 106 continues to step 310 where the request information in buffer 110 is saved to a log file 112 according to the value Save Before and After 119 in control buffer space 108. This causes not only request information relating to the request which satisfied the Save Criteria 115 to be saved, but also request information in respect of a number of requests issued before and after that request. This helps understanding of the program logic during subsequent analysis. Logger 106 then sets Flag 2 to "1" which indicates to control program 105 that the Save Criteria 115 were satisfied. If the Save Criteria 115 are satisfied then this causes the control program 105 to modify the operation of logger 106 to sample request information more frequently for the next few groups of requests according to the value Number of Repeats 117, as will now be described.

The operation of sampling information more frequently for the following few groups of requests is controlled by the variable Counter 116. If Counter=-1 then this indicates that the system is not currently performing repeated more frequent sampling. If Counter equals any other value, then this indicates that repeated frequent sampling is being carried out.

Returning to figure 3 at steps 208 and 210, if logger 106 sets Flag 2 to "1", indicating that the contents of the buffer satisfied the Save Criteria 115, then control program 105 moves to step 212 where, if the value of Counter equals "-1" then Counter 116 is set to "0" and PERIOD is set equal to the value Special Wait Period 118. Then, at step 214 Flag 2 is again set to "-1 ".

At step 215 a decision is made. If Counter=-1 then this indicates normal operation and the program returns to step 204. If not, then this indicates repeated frequent sampling is taking place and the program moves to step 216.

At step 216 control program 105 determines whether the value of Counter 116 equals Number of Repeats 117 plus "1". This determines whether enough repeats have been performed. At step 218 Counter 116 is incremented by adding "1" to the counter value. At step 220 Counter 116 is again set to "-1 ".

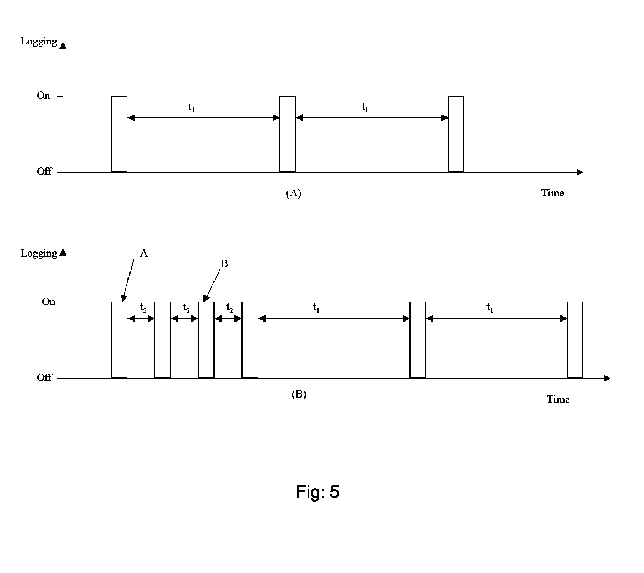

Referring to Figures 5a and 5b, if the Save Criteria are satisfied during repeated sampling, this does not have the effect of "resetting" the number of repeats. Figure 5a illustrates normal operation where the Save Criteria 115 are not satisfied. Thus, the system operates to sample request information at Normal Wait Period 114 intervals t1.

Referring to Figure 5b, during sampling period A, request information is sampled which satisfies the Save Criteria 115. This triggers the system to make three repeated samples at intervals t2 being the Special Wait Period 118. During sample B, request information is sampled which satisfies the Save Criteria 115. However, the system returns to normal operation after three repeated samples following sample A. This serves to lessen prolonged repeated frequent sampling caused by the same, or similar problems.

Operation of the control program 105 and logger 106 continue as described above. When program 102 stops, job scheduler stops control program 105 and logger 106. The log file 112 produced can then be analysed in a known manner.

Worked Example

To illustrate operation of the above described method and system a worked example will now be described. In this example, program 102 is a financial accounting program which is to perform a "data mining" operation in respect of a large number of customer accounts held at a financial institution. The details of the customer accounts are stored in database 104.

The user schedules program 102 to run at night on the financial institution's computer system 999 and wishes to gather information about the operation of program 102. The user schedules control program 105 and logger 106 to start at the same time as program 102.

The user sets the following settings:

Buffer size: 200

Normal Wait Period: 15 seconds

Special Wait Period: 1 second

Save Criteria 1: SQL takes more than 200ms to process

Save Criteria 2: SQL consults a particular table of database 104

Number of Repeats: 3

Save Before and After: 5

Program 102 subsequently runs overnight and a log file 112 is produced. Log file 112 can then be analysed in a known manner to look for an indication of any problems being encountered during operation of program 102. The log file produced is substantially smaller than if information relating to all SQL requests had been saved to the log file. The log file only includes details of the SQL requests that satisfied the Save Criteria that were captured during sampling operations spread across the entire duration of running the program. Thus it can be seen that the method and system of the present invention provide at least the advantage of a log file of reduced size that contains significant event information spanning the entire duration of the running of the program being monitored.

Whilst the preferred embodiment described above related to a financial software program, the invention has broader application to any program that requests information from a database.

Whilst the embodiment described above involved a batch job, the invention has application to other types of computer programs that issue requests to a database.

Whilst the embodiment described above utilised SQL database queries, the invention has application to computer systems that issues other types of database queries.

List of References

999 computer network system

900 computer

910 processor

920 memory

930 bus

940 input device

950 output device

960 user interface

970 program carrier

980 program signal

100 CPP

102 Program

104 Database

105 Control Program

106 logger

107 Flag 1

108 Control Buffer Space

109 Flag 2

110 Buffer

112 Log file

113 Buffer Size

114 Normal Wait Period

115 Save Criteria

116 Counter

117 Number of Requests

118 Special Wait period

119 Save Before and After

120 Issued SQL request to database

122 response returned from database

200-399 process steps

## Claims

1. A method of gathering information regarding the operation of a computing system, the computing system being arranged to issue requests to a database, the method including the steps of: sampling request information at intervals; and storing the sampled request information for subsequent analysis.

2. A method according to claim 1 wherein the request information includes details of the request issued along with details of the response returned from the database.

3. A method according to either claim 1 or claim 2 wherein the request information includes details of the execution time of the request, the database access path, the name of the program that issued the request, or the name of the user running the program.

4. A method according to any one of the preceding claims wherein the requests which are sampled are be grouped together, each group of requests being issued during a short period of time.

5. A method according to claim 4 wherein each group of requests includes a series of requests that are issued consecutively.

6. A method according to either claim 4 or claim 5 wherein each group of requests includes a predetermined number of requests.

7. A method according to any one of claims 4 to 6 wherein each group is separated by a pre-determined time period.

8. A method according to any preceding claim further including the step of determining whether the request information sampled for each request satisfies pre-determined criteria.

9. A method according to claim 8 wherein the pre-determined criteria includes whether the request took more than a predetermined time to be satisfied.

10. A method according to any one of the preceding claims wherein the step of storing the request information includes the condition that the request information is only stored if the pre-determined criteria are satisfied.

11. A method according to any one of the preceding claims wherein the step of storing further includes storing request information for requests that were issued at around the same time as the request that fulfilled the pre-determined criteria.

12. A method according to claim 7 further including the step of modifying the predetermined time period if the pre-determined criteria are satisfied.

13. A method according to claim 8 further including the step of modifying the predetermined criteria if the pre-determined criteria are satisfied.

14. A system for gathering information regarding the operation of a computing system, the computing system being arranged to issue requests to a database, the system including: sampling means for sampling request information at intervals; and storage means for storing the sampled request information for subsequent analysis.

15. A system according to claim 14 further including determining means for determining whether the request information sampled for each request satisfies pre-determined criteria.

16. A system according to either claim 14 or claim 15 wherein the storage means only stores the request information if the pre-determined criteria are satisfied.

17. A system according to any one of claims 14 to 16 wherein the storage means is arranged to store request information for requests that were issued at around the same time as the request that fulfilled the pre-determined criteria.

18. A computer program arranged to instruct a computing system to conduct a method according to any one of claims 1 to 13.

19. A computer readable medium including a computer program according to claim 18.
